# EUROPEAN PATENT APPLICATION

(11) **EP 1 840 739 A1**
(43) Date of publication of application: **03.10.2007**
(21) Application number: 05772573.1
(22) Date of filing: 22.08.2005
(51) Int. Cl.: G06F 9/45, G06F 9/455, G06N 1/00

(54) **PROGRAM DEVELOPMENT SUPPORT DEVICE FOR COMPUTER SYSTEM INCLUDING QUANTUM COMPUTER, PROGRAM DEVELOPMENT SUPPORT PROGRAM, AND SIMULATION DEVICE**

(30) Priority: 09.12.2004 JP 2004356175
(71) Applicant: National University Corporation Nara Institute of Science and Technology, Ikoma-shi, Nara 630-0192 (JP)
(72) Inventor: YAMASHITA, Shigeru c/o NATIONAL UNIVERSITY CORP, 8916-5, Takayama-cho Ikoma-shi Nara 6300 (JP)
(74) Representative: Hoeger, Stellrecht & Partner Patentanwälte
(86) International application number: PCT/JP2005/015181
(87) International publication number: WO 2006/061926

(57) **Abstract**

A section detector 12 detects a section in a source code written in the C++ language for performing a database search process, and a processing time estimator 13 estimates both the processing time for the section by a conventional logic operation and the processing time by quantum computing based on Grover's search algorithm. If it is determined that the latter is shorter than the former by a determiner 14, a replacing processor 15 replaces the section with a program written in C++ corresponding to Grover's search algorithm. Accordingly, a source code is completed in which a portion or portions suitable for computing by quantum computer is replaced. Thus, with the present invention, it is possible to easily develop a program for simulating a cooperative operation between a quantum computer and a conventional computer in a computer system including the two types of computers.

## Description

The present invention relates to a program development support apparatus for supporting the development of a program for operating a computer system including a quantum computer and a conventional computer, and relates to a program development support apparatus and a simulation apparatus for supporting the development of a program for simulating a cooperative operation between a quantum computer and a conventional computer in the aforementioned type of computer system by using a conventional computer.

A quantum computer operates on a principle which is totally different from those of existing computers (called "conventional computers" in this specification). It is a computer using quantum state transitions of substances such as an atom, ion, electron and photon. Since it has been logically demonstrated that quantum computers can compute far faster than conventional computers in solving factorization and other problems, many organizations and institutes around the world are devoted to the research and development of quantum computers. Current studies of quantum computers can be divided into two major efforts. One is the development of quantum logic gates, i.e. hardware components to be used as elementary elements for carrying out operations of a quantum computer. The other is a software-related study of an algorithm for quantum computing of a quantum computer using quantum logic gates, which will be realized in the future

The most famous researches on a quantum algorithm are Shor's polynomial time algorithm for integer factorization and discrete logarithm problem (see Non-Patent Document 1) and Grover's database search algorithm for the purpose of searching an unsorted database (see Non-Patent Document 2). In order to solve an N-entry search problem, it is known that while it requires up to O(N) steps of operation by conventional search methods, it only takes up to O(√ N) steps by the above-mentioned Grover's algorithm. As just described, a quantum computer can solve a problem, which a conventional computer takes huge amount of time to solve, in a dramatically short time.

As stated earlier, since the principle of quantum computing of a quantum computer is totally different from the computing principle of conventional computers, it is a fairly difficult task to write a program based on a quantum algorithm and examine how the program operates on an existing conventional computer. Of course, many higher-level programming languages for writing a quantum algorithm have been proposed so far. However, these special programming languages are so cumbersome that only those who are familiar with quantum computing can write them.

Although the high-speed feature of a quantum computer in comparison to conventional computers has been attracting attention, a quantum computer is not better than conventional computers in all kinds of arithmetic processing. It is possible that a quantum computer may be as well or worse in practice than conventional computers in performing some problems, such as easy four mathematic calculations for example, which can be performed quickly enough even by conventional computers. In addition, there is a high possibility that a quantum computer will be much more expensive than conventional computers even if a quantum computer is put to practical use. Hence, in view of cost performance, executing every problem on a quantum computer is not very effective. Rather, it is probably advantageous to use both a conventional computer and a quantum computer and assign the right problems to the right computers - in other words, the problems which either of the computers is better at. In a computer system including a conventional computer and a quantum computer, it is necessary to make the two types of computers operate in a cooperative manner. Therefore, it is preferable that all the programs be written in an existing programming language which is used on conventional computers. However, at present, this kind of need is not recognized, and there is no environment for developing a program or algorithm in view of such a need.

Although a quantum computer is not realized yet, simulating quantum computing by using conventional computers has been intensively studied and programs for such simulators are available. However, examining the cooperative operation in a computer system including a conventional computer and a quantum computer as described earlier is very inefficient because troublesome and cumbersome operations are required, such as for example, executing a program created for a quantum computing simulator on a conventional computer to obtain a calculation result, and creating another program incorporating the result, and then executing this program on a conventional computer again. At a stage before a quantum computer is realized, a tool for effectively examining a variety of algorithms including quantum computing is, therefore, much needed.

[Non-Patent Document 1] P.W. Shor, "Algorithms for Quantum computation: Discrete Logarithms and Factoring", Proc. Annual 35th Symposium on Foundations of Computer Science, 1994, pp.124-134
[Non-Patent Document 2] L.K. Grover, "A fast quantum mechanical for database search", Proc. Annual ACM Symposium on Theory of Computing, 1996, pp. 212-219

### DISCLOSURE OF THE INVENTION

### PROBLEM TO BE SOLVED BY THE INVENTION

The present invention is directed to solve the above-described problems. A first object of the present invention is to provide a program development support apparatus for supporting those who have at least the knowledge of an existing higher-level programming language, even if they have little knowledge of quantum computing or a quantum computer, to easily create programs for a simulation and for operating the simulation efficiently when trying to simulate a cooperative operation between a quantum computer and a conventional computer in a computer system including the two types of computers by using a conventional computer. The first object of the present invention is also to provide a simulation apparatus for easily simulating a process operation of such a computer system.

A second object of the present invention is to provide a program development support apparatus for supporting those who have at least the knowledge of an existing higher-level programming language, even if they have little knowledge of quantum computing or a quantum computer, to easily create and describe programs including quantum computing when creating a program for executing a certain process operation on a computer system including a conventional computer and a quantum computer.

### MEANS FOR SOLVING THE PROBLEMS

As described earlier, a quantum computer does not execute all kinds of arithmetic processes dramatically faster than conventional computers although its high-speed feature has been attracting attention. Then, the inventor of the present invention conceived of a load distribution processing as an effective application method of a computer system including a conventional computer and a quantum computer; assigning only specific processes which is known beforehand to be highly likely to suit for quantum computing to the quantum computer and assigning general processes other than the specific processes to the conventional computer.

Specifically, the inventor focused on the database search process for which Grover's search algorithm for quantum computing, which is already confirmed to be likely able to perform faster than processes of conventional computers and has a broad range of applications (including improved search algorithms based on Grover's search algorithm here), can be applied. When such a database search process exists in a source code written in a higher-level programming language for conventional computers, typically written in the C++ language, only that portion is replaced with a program for simulating Grover's search algorithm or a program corresponding to the search algorithm. Therefore, the intended program can be created only with the knowledge of an existing higher-level programming language.

Hence, a first aspect of the present invention to achieve the above-mentioned first object is a program development support apparatus for supporting a development of a program for simulating a cooperative operation between a quantum computer and a conventional computer in a computer system including the two types of computers by using a conventional computer, the apparatus including:
a) an input unit for entering a source code written in an existing higher-level programming language which is compliant with the conventional computer;
b) an extractor for selectively extracting a process portion which is more suitable for quantum computing by the quantum computer than arithmetic processing by the conventional computer based on a description of the source code entered through the input unit; and
c) a replacer for executing a replacing process in which the process portion extracted by the extractor is replaced with a program written in the programming language for simulating a quantum computing operation corresponding to the process portion by the quantum computer.

A second aspect of the present invention to achieve the above-mentioned first object is a program development support program for creating a program with a conventional computer, the program being for simulating a cooperative operation between a quantum computer and a conventional computer in a computer system including the two types of computers, wherein the program makes a computer execute a replacing process including the steps of:
when a source code written in an existing higher-level programming language which is compliant with the conventional computer is entered, selectively extracting a process portion which is more suitable for quantum computing by the quantum computer than arithmetic processing by the conventional computer based on a description of the source code; and
replacing the extracted process portion with a program written in the programming language for simulating a quantum computing operation corresponding to the process portion by the quantum computer.

In the first and second aspects of the present invention, it is possible to use all sorts of programming languages. In one specific embodiment, the programming language may be the C++ language.

### EFFECT OF THE INVENTION

With a program development support apparatus in accordance with the first aspect of the present invention and a program for supporting creating a program in accordance with the second aspect of the present invention, as long as a content of the process to be executed by the computer system is described in C++ or other programming languages, the extractor selectively extracts a process portion which is more suitable for quantum computing by a quantum computer than arithmetic processing by a conventional computer based on a description of the entered source code, and the replacer automatically replaces the process portion with a program for simulating a quantum computing operation corresponding to the process portion. Therefore, even a programmer who has little knowledge of quantum computing or quantum algorithms can easily write and create a program for simulating a cooperative operation between the two types of computers. Hence, it is possible to easily and effectively examine a cooperative operation between a conventional computer and a quantum computer, and new development of an algorithm therefor is promoted.

In the first and second aspects of the present invention, it is preferable that, when a process portion suitable for quantum computing is selectively extracted, a process portion corresponding to a database search based on the description of the entered source code be detected, and a time required to execute the process written in the detected process portion by the conventional computer and a time required to execute the process by the quantum computer be individually estimated, and when determined that the latter is shorter than the former, it can be determined that the detected process portion is the process portion suitable for quantum computing by the quantum computer.

In this case, the replacer may replace the process portion extracted by the extractor with a program for simulating Grover's search algorithm for quantum computing on a conventional computer.

In general, the database search of Grover's search algorithm, which is quantum computing, is faster than database search algorithm by a conventional computer, but, for example, when parameters of a target to be searched are few, the search speeds of both computers could be roughly equal or the database search algorithm by a conventional computer could be faster. On the other hand, in the present invention as previously described, even if there exists a process portion which can be replaced by Grover's search algorithm in the entered source code, a replacement process is not executed unconditionally, but the processing time of each of the two computers is estimated beforehand and these processing times are compared to determine whether or not it is effective to replace with quantum computing. Therefore, the simulation can be hereby performed under the condition that the quantum computer is used more effectively.

In addition, the program development support apparatus in accordance with the first aspect of the present invention, which can be utilized independently, may also be incorporated into a simulation apparatus for simulating a cooperative operation between a quantum computer and a conventional computer in a computer system including the two types of computers by using a conventional computer. More specifically, such a simulation apparatus further includes a compiler for compiling the source code after the replacing process is executed by the replacer of the program development support apparatus in accordance with the first aspect of the present invention, and a computer for executing a process operation in accordance with the compiled machine language.

With this simulation apparatus, as long as a source code written in an existing higher-level programming language, e.g. the C++ language, is entered, any portion of the entered code suitable for quantum computing by a quantum computer is automatically converted to a program for simulating the quantum computing and then a cooperative operation between a conventional computer and a quantum computer is simulated. Therefore, it is useful for new development and improvement of the quantum algorithm since operations of this kind can be examined very easily and effectively.

The program development support apparatus and the program for supporting creating a program in accordance with the first and second aspects of the present invention use a conventional computer to simulate a quantum computer that performs quantum computing and a quantum algorithm. A program development support apparatus in accordance with a third aspect of the present invention and a program for supporting creating a program in accordance with a fourth aspect of the present invention are tools to be used when a quantum computer is realized, for creating and developing a program for actually operating a computer system including the quantum computer and a conventional computer. Hence, while an extracted process portion is replaced with a program for simulating a quantum computing corresponding to the portion in the first and second aspects of the present invention, it is only necessary to modify this process to replace the process portion with a program for executing a quantum algorithm corresponding to the portion.

Thus, a third aspect of the present invention to achieve the above-mentioned second object is a program development support apparatus for supporting a development of a program for executing a certain operation in a computer system including a quantum computer and a conventional computer, the apparatus including:
a) an input unit for entering a source code written in an existing higher-level programming language which is compliant with the conventional computer;
b) an extractor for extracting a process portion which is more suitable for quantum computing by the quantum computer than arithmetic processing by the conventional computer based on a description of the source code entered through the input unit; and
c) a replacer for replacing the process portion extracted by the extractor with a program for executing a quantum algorithm corresponding to the process portion.

A fourth aspect of the present invention to achieve the above-mentioned second object is a program development support program for creating a program with a conventional computer, the program being for executing a certain process operation in a computer system including a quantum computer and a conventional computer, wherein the program makes a computer execute the processes of:
when a source code written in an existing higher-level programming language which is compliant with the conventional computer is entered, selectively extracting a process portion which is more suitable for quantum computing by the quantum computer than arithmetic processing by the conventional computer based on a description of the source code; and
replacing the extracted process portion with a program for executing a quantum algorithm corresponding to the process portion.

With the program development support apparatus in accordance with the third aspect of the present invention and a program for supporting creating a program in accordance with the fourth aspect of the present invention, when creating and developing a program for effectively operating a computer system including both a conventional computer and a quantum computer, even those who have little knowledge of a quantum computer or quantum computing can participate in creating and developing the program, so that the program can be efficiently developed.

### BRIEF DESCRIPTION OF THE DRAWINGS

Fig.1 is a conceptual diagram showing an example of a future computer system including both a quantum computer and a conventional computer.
Fig. 2 is a block diagram of a program development support apparatus in accordance with an embodiment of the present invention.
Fig. 3 is a flowchart explaining an operation of a program development support apparatus in accordance with the embodiment.
Fig. 4 is a simplified example of a source code written in C++, which is entered to a program development support apparatus in accordance with the embodiment.
Fig. 5 is a source code produced when the source code shown in Fig. 4 was entered.

### BEST MODES FOR CARRYING OUT THE INVENTION

An embodiment of a program development support apparatus in accordance with the present invention will hereinafter be described with reference to figures.

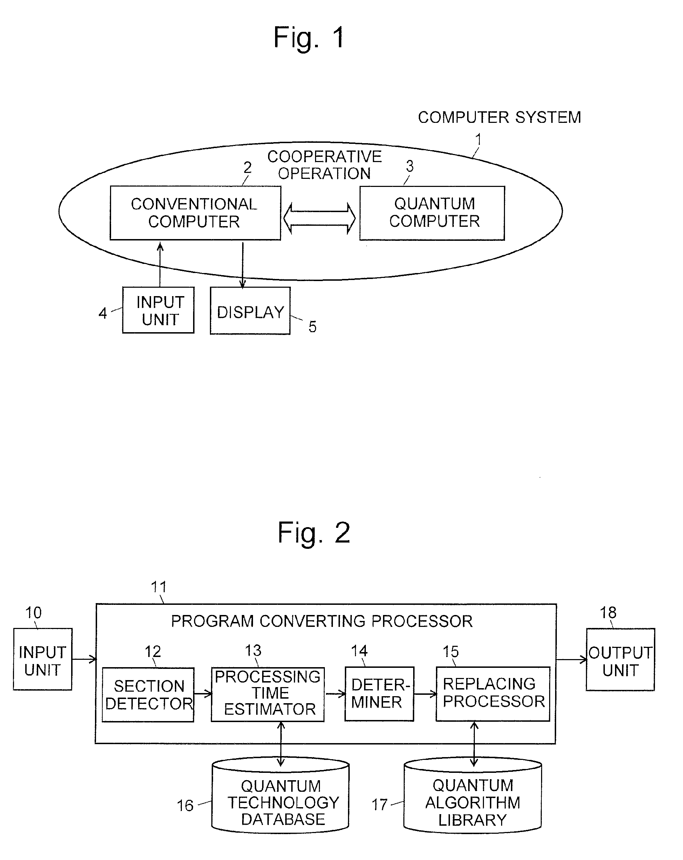

Fig. 1 is a conceptual diagram showing an example of a future computer system including a quantum computer and a conventional computer. In Fig. 1, a conventional computer 2 is an existing computer which executes arithmetic processing based on a bit which expresses either of two values: "0" and "1". On the other hand, a quantum computer 3 is a computer which executes arithmetic processing based on a quantum bit (or a qubit) which can hold a superposition of "0" and "1" with a certain probability. An input unit 4 and a display 5 are connected to the conventional computer 2. An operator can provide instructions to a computer system 1 via the input unit 4, and check the result of arithmetic processing for example executed by the computer system 1 via the display 5. The conventional computer 2 and the quantum computer 3 are connected to each other. Basically, the two computers can operate independently, but a single process can be executed when operating cooperatively with each other.

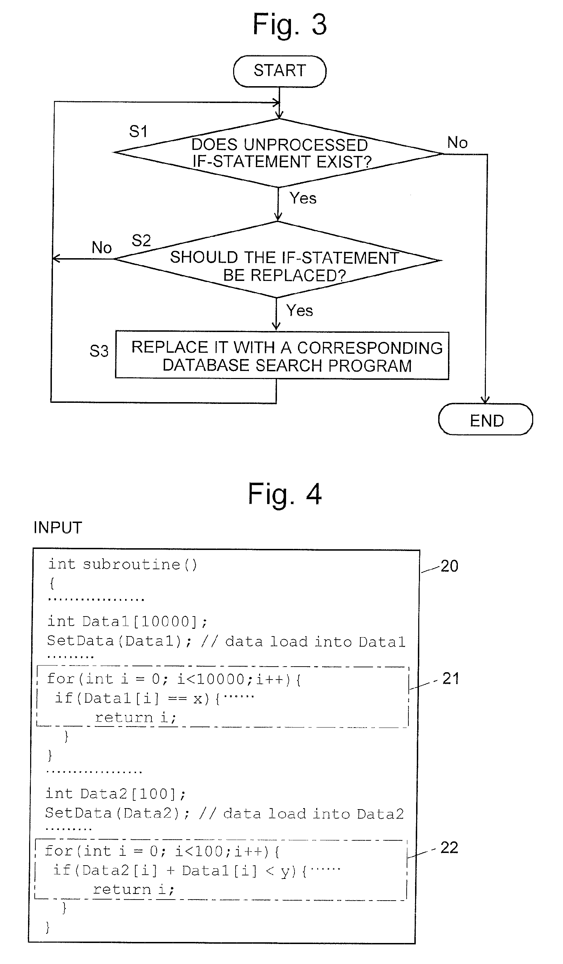

The program development support apparatus in accordance with this embodiment is an apparatus for supporting the creation and development of a program for simulating the cooperative operation between the computers 2 and 3 in the computer system 1 as shown in Fig. 1 by using a currently available (i.e. conventional) computer. Although the program development support apparatus in accordance with the embodiment is a form of the first aspect of the present invention, it can be practically realized by executing a program in accordance with the second aspect of the present invention on an existing (i.e. conventional) computer. Fig. 2 is a block diagram showing functional blocks of the program development support apparatus in accordance with this embodiment. Fig. 3 is a rough flowchart explaining the process operation of the program development support apparatus in accordance with this embodiment.

This program development support apparatus includes an input unit 10 for entering a source code in which a certain processing program is written in an existing higher-level programming language, the C++ language in the present case, a program converting processor 11 for processing the entered source code by a method to be described later and for converting a portion of the source code according to necessity, an output unit 18 for outputting a program produced by the converting process, and a quantum technology database 16 and a quantum algorithm library 17, both being associated with the program converting processor 11.

The program converting processor 11 includes the following functional blocks corresponding to processing steps which will be described later: a section detector 12 for detecting a certain section in a source code according to the description of it, a processing time estimator 13 for estimating both a processing time that it takes the quantum computer 3 to perform quantum computing of the detected certain section by using information stored in the quantum technology database 16 and a processing time that it takes the normal conventional computer 2 to perform arithmetic processing of the detected certain section, a determiner 14 for comparing the processing times of the two computers 2 and 3 to determine whether or not it is necessary to replace the source code (program) of the certain section, and a replacing processor 15 for replacing a program of the section which is necessary to be replaced by using data stored in the quantum algorithm library 17.

Fig. 4 is a simplified example of a source code to be processed by this apparatus, written in C++. When the source code 20 is entered from the input unit 10, the section detector 12 in the program converting processor 11 finds a program section for performing a database search according to the description of the source code 20. In C++, an if-statement is used to write a code for a database search, as in the program section 21 in Fig. 4. Accordingly, whether or not there exists an unprocessed if-statement is hereby determined (Step S1). When all the if-statements in the entered source code have been processed (irrespective of whether or not they have been actually replaced), this process is discontinued.

When an unprocessed if-statement exists, the section detector 12 extracts the if-statement and transfers it to the processing time estimator 13. The processing time estimator 13 and the determiner 14 determine whether or not to replace the pertinent if-statement, i.e. whether or not it is appropriate to apply quantum computing (Step S2). Specifically, the processing time estimator 13 estimates the time that it takes a conventional computer to process the if-statement, i.e. a database search process. In the example shown in Fig. 4, the program section 21 will repeat the determination process of an if-statement up to 10000 times, and the time required for one round of if-statements can be preliminarily determined based on the computing speed of the CPU and other factors. Therefore, the processing time can be easily estimated by multiplying the two values.

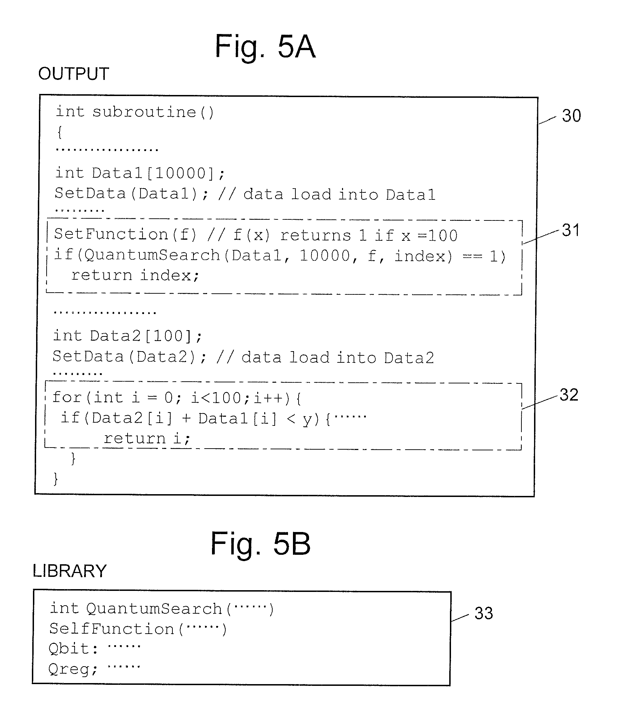

On the other hand, the processing time estimator 13 also estimates the time required to perform a process of Grover's search algorithm corresponding to the pertinent if-statement. In particular, in the case of a quantum computer, the program section 21 shown in Fig. 4 corresponds to the program section 31 in the source code 30 shown in Fig. 5(a). Specifically, the program section 21 can be converted to the subroutine program stating "Quantum Search". Details of the process operation of the subroutine program "Quantum Search" is described in C++ in the library 32 shown in Fig. 5(b). It is known that the maximum repetition count of a search process using Grover's search algorithm is √ N, provided that the count is N in conventional cases. Therefore, in the present example, the operation will be repeated no more than 100 times. However, in this case, the time required for one arithmetic processing is not always the same as in conventional cases. This is because the conventional logic operation guarantees one-step execution of certain operations, such as a combination of four arithmetic operations, which is not guaranteed in the case of quantum state manipulation. One possible approach to this problem is to use a quantum circuit design approach, which is known from previous researches, to actually create a quantum circuit corresponding to an arithmetic operation described with an if-statement and then estimate how many steps are required.

In this embodiment, one step of operation is enough for one database search. Therefore, the estimated value of the processing time for the program section 21 by quantum computing is smaller than the estimated value of the processing time by a conventional computer. The determiner 14 compares the two estimated values of the processing time, and if the estimated value by quantum computing is smaller, it determines that the pertinent if-statement should be replaced ("Yes" in Step S2), and replaces it with a corresponding database search program, the aforementioned subroutine program named "Quantum Search" which is hereby written in C++ (Step S3). As a result, the code of the program section 31 is inserted in place of the program section 21 in the source code.

Then, the process returns from Step S3 to Step S1, and whether or not there exists an unprocessed if-statement is determined. In the example of Fig. 4, there exists another if-statement in the program section 22. Therefore, similar to the previous case, the estimation and judgment of the processing time is performed. In this case, it is assumed that the estimated value of the processing time by quantum computing is longer than the estimated value of the processing time by a conventional computer because the number of parameters to be searched for in the database is as small as 100. In this case, it is determined that it should not be replaced in Step S2, and the process returns to Step S 1 without performing the previously described replacing process.

Then, when all the if-statements in the entered source code have gone through the process, the result of determination in Step S 1 will be "No," so that the program converting process will be finished. Consequently, the output shown in Fig. 5 is obtained from the output unit 18 in response to the input shown in Fig. 4. Specifically, within the source code obtained as the output, only one or more portions suitable for quantum computing, or only one or more portions which can be processed in a shorter time by using a quantum computer than by a conventional computer in particular, are each replaced with a program for simulating an operation which is to be performed by a quantum computer on a conventional computer. This program can be imported into an existing general computer and executed on it. Thus, using an existing (or conventional) computer, it is possible to simulate and examine the cooperative operation of the conventional computer 2 and the quantum computer 3 in the computer system 1 shown in Fig. 1.

The program development support apparatus shown in Fig. 2, which is capable of converting programs as described thus far, can be combined with a C++ compiler and a computer to obtain a simulation apparatus capable of simulating the cooperative operation between the two computers 2 and 3 in the above-mentioned computer system 1 on an existing general computer.

In the above-described embodiment, if there exists a database search section in an entered source code and at the same time if it is estimated that the time required to perform the search process is shorter when using quantum computing, the section is automatically replaced with a database search by quantum computing. In addition, it is also possible to pre-define directives or similar codes to be inserted into the source code so that some sections in the source code will be forcibly executed by using quantum computing or conversely a program which is normally more suited to be executed using quantum computing will be forcibly performed by arithmetic processing on a conventional computer.

The embodiment described thus far is an apparatus for supporting the creation and development of a program for simulation, and even before a hardware version of a quantum computer is completed, it is possible to use it for developing a quantum algorithm assuming that a hardware version of a quantum computer will be realized in the future. Moreover, when the hardware of a quantum computer is realized, it is possible to use it, with a little modification, as a tool for creating/developing a program for operating a computer system including a quantum computer and a conventional computer.

More specifically, the previous embodiment can be modified so that the subroutine program written in C++ for virtually performing, i.e. simulating, Grover's search algorithm on a logic circuit of a conventional computer and stored in the quantum algorithm library 17 is replaced with a program for operating qubits of a quantum computer corresponding to Grover's search algorithm. This construction facilitates the creation of a program for assigning only database search processes suitable for quantum computing by a quantum computer to a quantum computer.

In addition, although the previous embodiment had all the processing functions realized by the computers, a portion or the entirety of the functions can be implemented by a specially designed logic circuit.

Moreover, the embodiments described thus far are mere examples, and it is evident that any change or modification properly made within the spirit of the present invention is also covered within the scope of the present claims.

## Claims

1. A program development support apparatus for supporting a development of a program for simulating a cooperative operation between a quantum computer and a conventional computer in a computer system including the two types of computers by using a conventional computer, the apparatus comprising:
a) an input unit for entering a source code written in an existing higher-level programming language which is compliant with the conventional computer;
b) an extractor for selectively extracting a process portion which is more suitable for quantum computing by the quantum computer than arithmetic processing by the conventional computer based on a description of the source code entered through the input unit; and
c) a replacer for executing a replacing process in which the process portion extracted by the extractor is replaced with a program written in the programming language for simulating a quantum computing operation corresponding to the process portion by the quantum computer.

2. The program development support apparatus according to claim 1, wherein the programming language is a C++ language.

3. The program development support apparatus according to claim 1 or 2, wherein the extractor detects, when selectively extracting a process portion suitable for quantum computing, a process portion corresponding to a database search based on a description of the entered source code, individually estimates a time required to execute a process of the detected process portion by the conventional computer and a time required to execute the process by the quantum computer, and when determined that the latter is shorter than the former, determines that the detected process portion is the process portion suitable for quantum computing by a quantum computer.

4. The program development support apparatus according to claim 3, wherein the replacer replaces the process portion extracted by the extractor with a program for simulating Grover's search algorithm for quantum computing on a conventional computer.

5. A simulation apparatus for simulating a cooperative operation between a quantum computer and a conventional computer in a computer system including the two types of computers by using a conventional computer, the simulation apparatus including a program development support apparatus according to any of claims 1 through 4, and the simulation apparatus further comprising;
a compiler for compiling the source code after the replacing process is executed by the replacer; and
a computer for executing a process operation in accordance with the compiled machine language.

6. A program development support program for creating a program with a conventional computer, the program being for simulating a cooperative operation between a quantum computer and a conventional computer in a computer system including the two types of computers, wherein the program makes a computer execute a replacing process including steps of:
when a source code written in an existing higher-level programming language which is compliant with the conventional computer is entered, selectively extracting a process portion which is more suitable for quantum computing by the quantum computer than arithmetic processing by the conventional computer based on a description of the source code; and
replacing the extracted process portion with a program written in the programming language for simulating a quantum computing operation corresponding to the process portion by the quantum computer.

7. The program development support program according to claim 6, wherein the programming language is a C++ language.

8. The program development support program according to claim 6 or 7, wherein, when the process portion suitable for quantum computing is selectively extracted, a process portion corresponding to a database search based on the description of the entered source code is detected, and a time required to execute the process written in the detected process portion by the conventional computer and a time required to execute the process by the quantum computer are individually estimated, and when determined that the latter is shorter than the former, it is determined that the detected process portion is the process portion suitable for quantum computing by a quantum computer.

9. The program development support program according to claim 8, wherein the replacing process replaces the process portion extracted by the extractor with a program for simulating Grover's search algorithm for quantum computing on the conventional computer.

10. A program development support apparatus for supporting a development of a program for executing a certain process operation in a computer system including a quantum computer and a conventional computer, the apparatus comprising:
a) an input unit for entering a source code written in an existing higher-level programming language which is compliant with the conventional computer;
b) an extractor for extracting a process portion which is more suitable for quantum computing by the quantum computer than arithmetic processing by the conventional computer based on a description of the source code entered through the input unit; and
c) a replacer for executing a replacing process in which the process portion extracted by the extractor is replaced with a program for executing a quantum algorithm corresponding to the process portion.

11. The program development support apparatus according to claim 10, wherein the programming language is a C++ language.

12. The program development support apparatus according to claim 10 or 11, wherein the extractor detects, when selectively extracting the process portion suitable for quantum computing, a process portion corresponding to a database search based on the description of the entered source code, individually estimates a time required to execute a process of the detected process portion by the conventional computer and a time required to execute the process by the quantum computer, and when determined that the latter is shorter than the former, determines that the detected process portion is the process portion suitable for quantum computing by the quantum computer.

13. The program development support apparatus according to claim 12, wherein the replacer replaces the process portion extracted by the extractor with a program in which Grover's search algorithm for quantum computing is described.

14. A program development support program for creating a program with a conventional computer, the program being for executing a certain process operation in a computer system including a quantum computer and a conventional computer, wherein the program makes a computer execute a process including steps of:
when a source code written in an existing higher-level programming language which is compliant with the conventional computer is entered, selectively extracting a process portion which is more suitable for quantum computing by the quantum computer than arithmetic processing by the conventional computer based on a description of the source code; and
replacing the extracted process portion with a program for executing a quantum algorithm corresponding to the process portion.

15. The program development support program according to claim 14, wherein the programming language is a C++ language.

16. The program development support program according to claim 14 or 15, wherein, when a process portion suitable for quantum computing is selectively extracted, a process portion corresponding to a database search based on the description of the entered source code is detected, and a time required to execute a process of the detected process portion by the conventional computer and a time required to execute the process by the quantum computer are individually estimated, and when determined that the latter is shorter than the former, it is determined that the detected process portion is the process portion suitable for quantum computing by the quantum computer.

17. The program development support program according to claim 16, wherein the replacing process replaces the extracted process portion with a program in which Grover's search algorithm for quantum computing is described.
